# FASCICULE DE BREVET EUROPEEN

(11) **EP 1 680 645 B1**
(45) Date de publication et mention de la délivrance du brevet: **07.03.2007**
(21) Numéro de dépôt: 04818439.4
(22) Date de dépôt: 11.10.2004
(51) Int. Cl.: F42B 15/38, F15B 15/19

(54) **PIECE STRUCTURALE COMPOSITE A RUPTURE PYROTECHNIQUE DETONANTE**
VERBUNDBAUTEIL MIT PYROTECHNISCHEM SPRENGBRUCHMITTEL
COMPOSITE STRUCTURAL PART COMPRISING PYROTECHNIC DETONATING RUPTURE MEANS

(30) Priorité: 05.11.2003 FR 0312981
(43) Date de publication de la demande: 19.07.2006
(73) Titulaire: ASTRIUM SAS, 75016 Paris (FR)
(72) Inventeur: KISTER, Thomas, F-78740 Vaux/Seine (FR)
(74) Mandataire: Bonnetat, Christian
(86) Numéro de dépôt international: PCT/FR2004/002563
(87) Numéro de publication internationale: WO 2005/047810

(56) Documents cités:
- FR-A- 2 638 228
- FR-A- 2 665 951

## Description

La présente invention concerne une pièce structurale composite à rupture pyrotechnique détonante, tout particulièrement, quoique non exclusivement, appropriée à être utilisée dans les lanceurs spatiaux. Une telle pièce est connue de FR-A-2638228, qui montre toutes les caractéristiques du préambule de la revendication indépendante 1. Elle sera ci-après décrite plus particulièrement dans cette dernière application.

On sait que certains éléments des lanceurs spatiaux, tels que des étages adjacents, sont reliés mécaniquement -entre eux par une pièce structurale composite destinée à assurer la transmission des efforts mécaniques entre lesdits éléments tant que cela est nécessaire et pourvue de moyens de séparation pyrotechniques à détonation, intégrés à ladite pièce structurale et aptes à la rompre le long d'une ligne de séparation, rectiligne ou curviligne, lorsque lesdits éléments doivent être séparés les uns des autres. Des pièces structurales composites semblables, permettent également la découpe des structures porteuses de satellites à bord des lanceurs.

Au moment de la rupture d'une telle pièce structurale, c'est-à-dire au moment de la séparation des éléments structuraux qu'elle solidarise, lesdits moyens de séparation pyrotechniques engendrent un choc de détonation de grande amplitude, à haute fréquence et à vitesse de propagation élevée (plusieurs kilomètres par seconde), se propageant dans la structure à laquelle appartiennent lesdits éléments, l'amplitude et la fréquence dudit choc diminuant au fur et à mesure de sa propagation dans la structure.

Aussi, pour protéger les équipements et la charge utile contenus dans lesdits éléments structuraux, il est usuel de prévoir une pluralité de moyens d'amortissement discrets, généralement des plaques ou des bandes de matière viscoélastique, au voisinage desdits équipements et de la charge utile, afin d'atténuer le choc dont l'amplitude et la fréquence ont déjà été amoindries par la propagation.

On remarquera que la disposition d'une telle pluralité de moyens d'atténuation discrets augmente la complexité et le temps de montage desdits équipements et de la charge utile dans le lanceur.

La présente invention a pour objet principal de remédier à cet inconvénient.

A cette fin, selon l'invention, la pièce structurale composite à rupture pyrotechnique :
- destinée à assurer la transmission des efforts entre un premier et un second éléments structuraux ; et
- pourvue de moyens de séparation pyrotechniques à détonation allongés, intégrés à ladite pièce structurale et aptes à la rompre, de façon que ledit premier élément puisse être séparé dudit second élément le long d'une ligne de séparation,
est remarquable :
- en ce qu'elle comporte :
   - une première partie dans laquelle sont intégrés lesdits moyens de séparation pyrotechniques et apte à être reliée audit premier élément ;
   - une seconde partie apte à être reliée audit second élément ; et
   - des moyens d'assemblage rigide desdites première et seconde parties, par leurs extrémités libres opposées auxdits premier et second éléments, respectivement ; et
- en ce que lesdits moyens d'assemblage comportent des moyens d'amortissement :
   - disposés entre les extrémités libres desdits premier et second éléments ; et
   - aptes à amortir le choc détonant se propageant jusqu'à l'extrémité libre de ladite première partie lors de la détonation desdits moyens de séparation pyrotechniques.

Ainsi, selon l'invention, lesdits moyens d'amortissement sont intégrés à ladite pièce structurale composite, tout comme le sont lesdits moyens de séparation pyrotechniques. II en résulte que le choc détonant est amorti à sa source et qu'il n'est plus nécessaire de disposer une pluralité d'amortisseurs à proximité des équipements et de la charge utile. De plus, l'efficacité des moyens d'amortissement est élevée, puisque l'amplitude du choc n'est pas encore amoindrie lorsque celui-ci atteint lesdits moyens d'amortissement.

On remarquera de plus que, du point de vue industriel, la présente invention est avantageuse puisqu'elle permet d'obtenir une pièce composite unique, incorporant les moyens de séparation pyrotechniques et les moyens d'amortissement du choc de détonation.

De préférence, lesdits moyens d'assemblage forment une chambre enfermant lesdites extrémités libres desdites première et seconde parties et confinant lesdits moyens d'amortissement entre lesdites extrémités libres. Une telle chambre peut être formée par des flasques latéraux, disposés de part et d'autre desdites extrémités libres et solidarisés uniquement de ladite seconde partie.

Ainsi, lesdits moyens d'amortissement, non seulement procurent l'amortissement du choc de détonation, mais encore assurent la raideur des moyens d'assemblage entre lesdites première et seconde parties de ladite pièce structurale composite. Ils forment donc, à la fois, une barrière aux ondes détonantes et la liaison mécanique entre lesdites première et seconde parties.

A cet effet, il est avantageux que lesdits moyens d'amortissement se prolongent latéralement entre lesdits flasques latéraux et ladite extrémité libre de ladite première partie et y soient confinés et que l'extrémité libre de ladite première partie comporte une tête élargie.

Ainsi, lesdits moyens d'amortissement peuvent présenter une section à la forme au moins approximative d'un oméga stylisé, dont la cavité interne est emplie par ladite tête élargie. Il résulte de cette forme que, quelles que soient la direction et la nature des efforts appliqués auxdits moyens d'assemblage, ceux-ci entraînent la compression d'au moins une partie desdits moyens d'amortissement. La raideur desdits moyens d'assemblage dépend donc au premier chef de la compressibilité de la matière constitutive desdits moyens d'amortissement. Une telle matière constitutive peut être de type viscoélastique et être choisie, par exemple, parmi les caoutchoucs naturels, les silicones, les butadiènes-nitriles acryliques ou les polyuréthanes.

Pour des raisons de commodité, il est préférable que lesdits moyens d'amortissement se présentent sous la forme d'un profilé ouvert mis en place sur l'extrémité libre de ladite première partie pour l'enserrer.

II est avantageux que la surface desdits moyens d'amortissement au contact de l'extrémité libre de ladite première partie comporte des cavités permettant l'expansion de la matière desdits moyens d'amortissement, même lorsque ces derniers sont soumis à de faibles sollicitations mécaniques. Pour des sollicitations importantes, les cavités étant immédiatement remplies par lesdits moyens d'amortissement, la matière de ces derniènes est amenée à travailler en compressibilité volumique. Lesdites cavités permettent donc, dans une certaine mesure, d'adapter la raideur desdits moyens d'amortissement en fonction du niveau de sollicitation mécanique.

Les figures du dessin annexé feront bien comprendre comment l'invention peut être réalisée. Sur ces figures, des références identiques désignent des éléments semblables.

La figure 1 illustre, en coupe transversale, un exemple de réalisation de la pièce structurale composite à rupture pyrotechnique conforme à la présente invention.

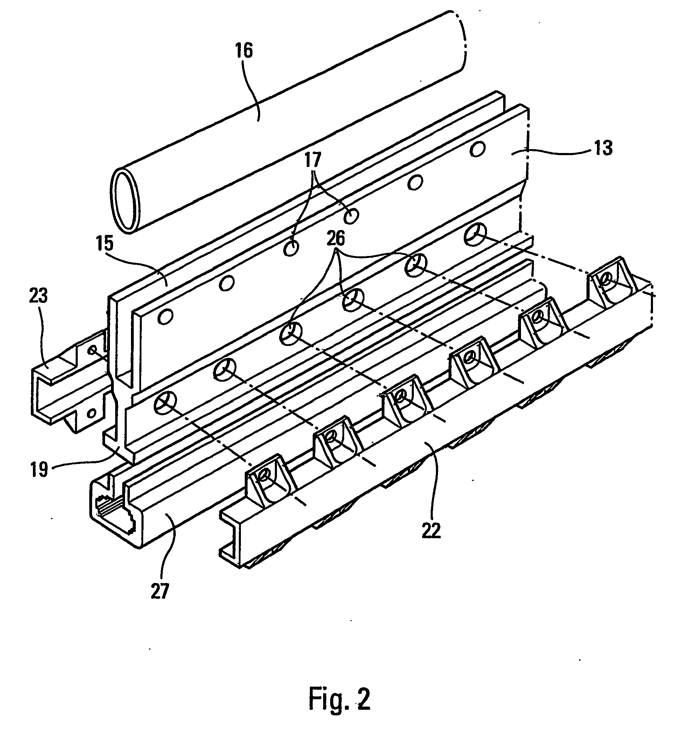

La figure 2 est une vue en perspective éclatée montrant certains composants de la pièce structurale représentée à titre d'exemple sur la figure 1.

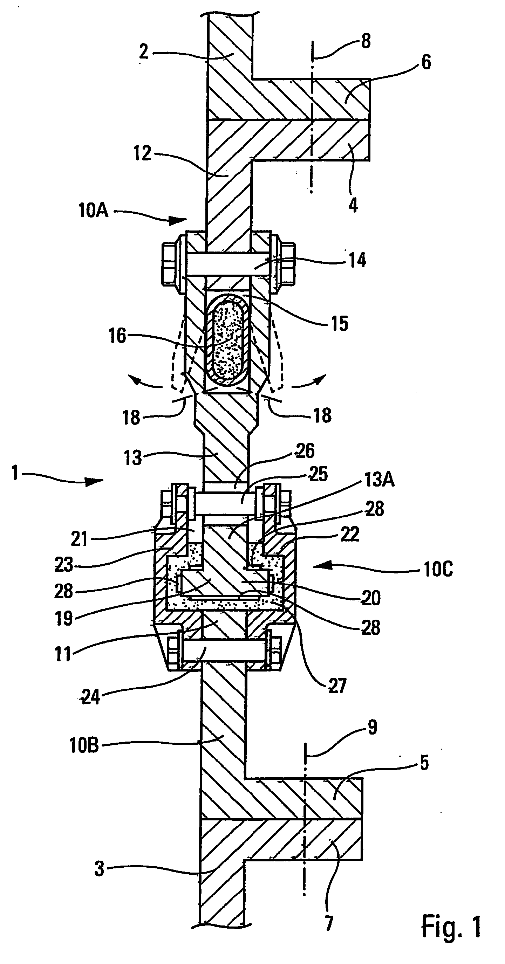

La pièce structurale composite à rupture pyrotechnique 1, montrée à titre d'exemple sur la figure 1, assure la solidarisation d'éléments 2 et 3 d'une structure mécanique (non autrement représentée), entre lesquels elle est disposée. A cet effet, la pièce structurale 1, par exemple réalisée en alliage léger, est pourvue, à ses extrémités, de brides 4 et 5 aptes à coopérer respectivement avec une bride 6 de l'élément 2 et avec une bride 7 de l'élément 3 et des moyens de serrage 8 et 9 (uniquement représentés par leurs axes sur la figure 1) assurent la solidarisation des brides 4 et 6 et des brides 5 et 7, respectivement.

La pièce structurale 1 est constituée d'une première partie 10A, d'une seconde partie 10B et de moyens d'assemblage 10C desdites première et seconde parties.

La seconde partie 10B porte la bride 5 et est donc reliée à l'élément 3. Du côté opposé à la bride 5, la seconde partie 10B présente une extrémité libre 11, dirigée vers la première partie 10A.

Quant à elle, la première partie 10A comporte deux éléments 12 et 13, fixés l'un à l'autre par des moyens de fixation 14. Du côté opposé à l'élément 13, l'élément 12 porte la bride 4.

En regard de l'élément 12, l'élément 13 comporte un logement ouvert 15 dans lequel est logé un cordeau pyrotechnique détonant 16 et dans lequel pénètre l'élément 12, qui obture ledit logement 15. Les moyens de fixation 14 traversent les parois du logement 15 (par des trous 17) et la partie de l'élément 12 disposée dans ce dernier, pour solidariser les éléments 12 et 13.

Au niveau du logement 15, l'élément 13 comporte au moins une zone 18 de rupture préférentielle.

A son extrémité libre 19, opposée au logement 15 et à l'élément 12, l'élément 13 comporte une tête élargie 20, par exemple à section de forme rectangulaire.

Les extrémités libres en regard 11 et 19 des parties 10B et 10A sont logées dans une chambre 21 formée par lesdits moyens d'assemblage 10C. Ces derniers comportent deux flasques 22, 23, disposés de part et d'autre de la seconde partie 10B et de l'élément 13 pour délimiter ladite chambre 21. D'un côté, les flasques 22 et 23 sont assemblés rigidement l'un à l'autre et à la seconde partie 10B par des moyens de serrage traversants 24. De l'autre côté, les flasques 22 et 23 sont assemblés rigidement l'un à l'autre par des moyens de serrage 25, traversant librement l'élément 13 par de larges ouvertures 26.

L'extrémité libre 19 de l'élément 13 est enserrée par un profilé ouvert 27, à section au moins approximative de oméga, réalisé en une matière viscoélastique telle qu'un caoutchouc naturel, un silicone, un butadiène-nitrile acrylique ou un polyuréthane. Le profilé 27 recouvre non seulement la tête élargie 20 de l'extrémité libre 19, mais encore la partie 13A de l'élément 13 adjacente à ladite tête élargie 20 et faisant partie de ladite extrémité libre 19. Grâce aux moyens de serrage 24 et 25, les flasques 22 et 23 pressent ledit profilé 27 contre l'extrémité libre 11 de la partie 10B, d'une part, et contre la partie 13A et la tête élargie 20 de l'élément 13, d'autre part.

Ainsi, il existe des portions confinées du profilé 27 entre les extrémités libres 11 et 19, ainsi qu'entre ladite extrémité libre 19 et les flasques 22 et 23.

On conçoit donc aisément que la raideur des moyens d'assemblage 10C dépend essentiellement de celle de la matière constitutive du profilé 27, et notamment de la compressibilité de cette dernière matière. On remarquera en effet que, quelles que soient la direction et la nature (compression, allongement, flexion, torsion, ...) des efforts appliqués aux moyens d'assemblage 10C, ceux-ci entraînent la compression d'une partie du profilé 27 :
- soit entre les extrémités libres 11 et 19 ;
- soit entre la tête élargie 20 et les flasques 22 et 23 ;
- ou bien encore entre la partie 13A et les flasques 22 et 23.

Comme mentionné ci-dessus, pour adapter au moins grossièrement la raideur du profilé 27 à l'importance des efforts appliqués aux moyens d'assemblage 10C, la surface externe de celui-ci, qui est au contact de la tête élargie 20, comporte des cavités 28 permettant l'expansion de la matière constitutive dudit profilé 27.

Lorsque l'élément 2 doit être séparé de l'élément 3, le cordeau pyrotechnique détonant 16 est activé, de sorte que l'élément 13 est rompu au niveau des zones de rupture 18, comme cela est illustré schématiquement sur la figure 1. Le choc de détonation engendré par l'activation du cordeau pyrotechnique 16 se propage jusqu'à l'extrémité libre 19 de l'élément 13, mais est empêché, sinon totalement du moins grandement, de se propager dans la partie 10B par le profilé 27, isolant cette dernière dudit élément 13.

## Revendications

1. Pièce structurale composite à rupture pyrotechnique (1) :
- destinée à assurer la transmission des efforts entre un premier et un second éléments structuraux (2, 3) ; et
- pourvue de moyens de séparation pyrotechniques à détonation (16) allongés, intégrés à ladite pièce structurale (1) et aptes à la rompre, de façon que ledit premier élément (2) puisse être séparé dudit second élément (3) le long d'une ligne de séparation,
**caractérisée :**
- **en ce qu'**elle comporte :
. une première partie (10A) dans laquelle sont intégrés lesdits moyens de séparation pyrotechniques (16) et apte à être reliée audit premier élément (2) ;
. une seconde partie (10B) apte à être reliée audit second élément (3) ; et
. des moyens (10C) d'assemblage rigide desdites première et seconde parties (10A, 10B), par leurs extrémités libres (11, 19) opposées auxdits premier et second éléments (2, 3), respectivement ; et
- **en ce que** lesdits moyens d'assemblage (10C) comportent des moyens d'amortissement (27) :
. disposés entre les extrémités libres (11, 19) desdits premier et second éléments (2, 3) ; et
. aptes à amortir le choc détonant se propageant jusqu'à l'extrémité libre (19) de ladite première partie (10A) lors de la détonation desdits moyens de séparation pyrotechniques (16).

2. Pièce structurale selon la revendication 1,
**caractérisée en ce que** lesdits moyens d'assemblage (10C) forment une chambre (21) enfermant lesdites extrémités libres (11, 19) desdites première et seconde parties (10A et 108) et confinant lesdits moyens d'amortissement (27) entre lesdites extrémités libres (11, 19).

3. Pièce structurale selon la revendication 2,
**caractérisée en ce que** ladite chambre (21) est formée par des flasques latéraux (22, 23), disposés de part et d'autre desdites extrémités -libres (11, 19) et solidarisés uniquement de ladite seconde partie (10B).

4. Pièce structurale selon la revendication 3,
**caractérisée en ce que** lesdits moyens d'amortissement (27) se prolongent latéralement entre lesdits flasques latéraux (22, 23) et ladite extrémité libre (19) de ladite première partie (10A) et y sont confinés.

5. Pièce structurale selon l'une des revendications 1 à 4,
**caractérisée en ce que** l'extrémité libre (19) de ladite première partie (10A) comporte une tête élargie (20).

6. Pièce structurale selon les revendications 4 et 5,
**caractérisée en ce que** lesdits moyens d'amortissement (27) présentent une section à la forme au moins approximative d'un oméga stylisé, dont la cavité interne est emplie par ladite tête élargie (20).

7. Pièce structurale selon l'une des revendications 1 à 6,
**caractérisée en ce que** lesdits moyens d'amortissement (17) se présentent sous la forme d'un profilé ouvert mis en place sur l'extrémité libre (19) de ladite première partie (10A) pour l'enserrer.

8. Pièce structurale selon l'une des revendications 1 à 7,
**caractérisée en ce que** la surface desdits moyens d'amortissement au contact de l'extrémité libre (19) de ladite première partie (10A) comporte des cavités (28) permettant l'expansion de la matière constitutive desdits moyens d'amortissement, lorsque lesdits moyens d'assemblage sont soumis à des sollicitations mécaniques.

9. Pièce structurale selon l'une des revendications 1 à 8,
**caractérisée en ce que** lesdits moyens d'amortissement (27) sont de type viscoélastique.

10. Pièce structurale selon la revendication 9,
**caractérisée en ce que** lesdits moyens d'amortissement (27) sont réalisés en une matière choisie dans celle du groupe comprenant les caoutchoucs naturels, les silicones, les butadiènes-nitriles acryliques ou les polyuréthanes.

## Claims

1. A pyrotechnically ruptureable composite structural component (1) :
- intended to transmit forces between a first and a second structural element (2, 3); and
- provided with elongate pyrotechnic detonation separation means (16) incorporated in said structural component (1) and able to break it so that said first element (2) can be separated from said second element (3) along a line of separation,
**characterized:**
- **in that** it comprises:
• a first part (10A) in which said pyrotechnic separation means (16) are incorporated and which is able to be connected to said first element (2);
• a second part (10B) able to be connected to said second element (3); and
• means (10C) of rigid assembly of said first and second parts (10A, 10B) via their free ends (11, 19) which are the opposite ends to said first and second elements (2, 3) respectively; and
- **in that** said assembly means (10C) comprise damping means (27):
• arranged between the free ends (11, 19) of said first and second elements (2, 3); and
• able to damp the detonation shock propagating to the free end (19) of said first part (10A) when said pyrotechnic separation means (16) are detonated.

2. The structural component as claimed in claim 1,
**characterized in that** said assembly means (10C) form a chamber (21) enclosing said free ends (11, 19) of said first and second parts (10A and 10B) and confining said damping means (27) between said free ends (11, 19).

3. The structural component as claimed in claim 2,
**characterized in that** said chamber (21) is formed by lateral plates (22, 23) arranged on each side of said free ends (11, 19) and secured only to said second part (10B).

4. The structural component as claimed in claim 3,
**characterized in that** said damping means (27) extend laterally between said lateral plates (22, 23) and said free end (19) of said first part (10A) and are confined there.

5. The structural component as claimed in one of claims 1 to 4,
**characterized in that** the free end (19) of said first part (10A) comprises a widened head (20).

6. The structural component as claimed in claims 4 and 5,
**characterized in that** said damping means (27) have a cross section in at least the approximate shape of a stylized omega, the internal cavity of which is filled by said widened head (20).

7. The structural component as claimed in one of claims 1 to 6,
**characterized in that** said damping means (17) are in the form of an open section placed over the free end (19) of said first part (10A) to enclose it.

8. The structural component as claimed in one of claims 1 to 7,
**characterized in that** the surface of said damping means in contact with the free end (19) of said first part (10A) comprises cavities (28) allowing the constituent material of said damping means to expand when said assembly means are subjected to mechanical stresses.

9. The structural component as claimed in one of claims 1 to 8,
**characterized in that** said damping means (27) are of visco-elastic type.

10. The structural component as claimed in claim 9,
**characterized in that** said damping means (27) are made of a material chosen from materials in the group comprising natural rubbers, silicones, acrylonitrile butadienes or polyurethanes.

## Patentansprüche

1. Verbundbauteil mit pyrotechnischem Bruchmittel (1):
- das dazu bestimmt ist, die Übertragung der Kräfte zwischen einem ersten und zweiten Strukturelement (2, 3) zu gewährleisten; und
- das mit langgestreckten pyrotechnischen Sprengtrennmitteln (16) versehen ist, die in das Bauteil (1) integriert sind und es brechen können, so dass das erste Element (2) entlang einer Trennlinie vom zweiten Element (3) getrennt werden kann,
**dadurch gekennzeichnet:**
- **dass** es umfasst:
• einen ersten Teil (10A), in den die pyrotechnischen Trennmittel (16) integriert sind und der in der Lage ist, mit dem ersten Element (2) verbunden zu werden;
• einen zweiten Teil (10B), der in der Lage ist, mit dem zweiten Element (3) verbunden zu werden; und
• Mittel (10C) zur starren Verbindung des ersten und zweiten Teils (10A, 10B) durch ihre freien Enden (11, 19), die dem ersten bzw. dem zweiten Element (2, 3) gegenüberliegen; und
- **dass** die Verbindungsmittel (10C) Dämpfungsmittel (27) umfassen:
• die zwischen den freien Enden (11, 19) des ersten und zweiten Elements (2, 3) angeordnet sind; und
• die in der Lage sind, den Detonationsstoß zu dämpfen, der sich bei der Detonation der pyrotechnischen Trennmittel (16) bis zum freien Ende (19) des ersten Teils (10A) ausbreitet.

2. Verbundbauteil nach Anspruch 1, **dadurch gekennzeichnet, dass** die Verbindungsmittel (10C) eine Kammer (21) bilden, die die freien Enden (11, 19) des ersten und zweiten Teils (10A und 10B) umschließt und die Dämpfungsmittel (27) zwischen den freien Enden (11, 19) einschließt.

3. Verbundbauteil nach Anspruch 2, **dadurch gekennzeichnet, dass** die Kammer (21) durch seitliche Flansche (22, 23) gebildet wird, die zu beiden Seiten der freien Enden (11, 19) angeordnet sind und einzig mit dem zweiten Teil (10B) fest verbunden sind.

4. Verbundbauteil nach Anspruch 3, **dadurch gekennzeichnet, dass** sich die Dämpfungsmittel (27) seitlich zwischen den seitlichen Flanschen (22, 23) und dem freien Ende (19) des ersten Teils (10A) erstrecken und hier eingeschlossen sind.

5. Verbundbauteil nach einem der Ansprüche 1 bis 4, **dadurch gekennzeichnet, dass** das freie Ende (19) des ersten Teils (10A) einen erweiterten Kopf (20) umfasst.

6. Verbundbauteil nach den Ansprüchen 4 und 5, **dadurch gekennzeichnet, dass** die Dämpfungsmittel (27) einen Querschnitt mit der zumindest annähernden Form eines stilisierten Omega aufweisen, dessen innerer Hohlraum mit dem erweiterten Kopf gefiillt (20) ist.

7. Verbundbauteil nach einem der Ansprüche 1 bis 6, **dadurch gekennzeichnet, dass** die Dämpfungsmittel (17) in der Form eines offenen Profils vorliegen, das am freien Ende (19) des ersten Teils (10A) angebracht wird, um es zu umschließen.

8. Verbundbauteil nach einem der Ansprüche 1 bis 7, **dadurch gekennzeichnet, dass** die Oberfläche der Dämpfungsmittel, die sich in Kontakt mit dem freien Ende (19) des ersten Teils (10A) befindet, Hohkäume (28) umfasst, die die Ausdehnung des Werkstoffes der Dämpfungsmittel ermöglichen, wenn die Verbindungsmittel mechanischen Beanspruchungen ausgesetzt sind.

9. Verbundbauteil nach einem der Ansprüche 1 bis 8, **dadurch gekennzeichnet, dass** die Dämpfungsmittel (27) vom viskoelastischen Typ sind.

10. Verbundbauteil nach Anspruch 9, **dadurch gekennzeichnet, dass** die Dämpfungsmittel (27) aus einem Werkstoff gefertigt sind, der aus der Gruppe gewählt wird, die natürliche Kautschuke, Silikone, Akrylnitril-Butadiene oder Polyurethane umfasst.
